# EUROPEAN PATENT SPECIFICATION

(11) **EP 2 633 669 B1**
(45) Date of publication and mention of the grant of the patent: **25.04.2018**
(21) Application number: 11773583.7
(22) Date of filing: 23.09.2011
(51) Int. Cl.: H04L 29/08, H04L 29/06, H04N 21/4227

(54) **SYSTEMS AND METHODS TO SHARE ACCESS TO PLACESHIFTING DEVICES**
SYSTEME UND VERFAHREN FÜR DEN GEMEINSAMEN ZUGRIFF AUF PLACESHIFT-GERÄTE
SYSTÈMES ET PROCÉDÉS DE PARTAGE D'ACCÈS À DISPOSITIFS D'ACCÈS EN NOMADE

(30) Priority: 27.10.2010 US 913084
(43) Date of publication of application: 04.09.2013
(73) Proprietor: Sling Media PVT Ltd, 560017 Bangalore (IN); Sling Media L.L.C., Foster City, CA 94404 (US)
(72) Inventor: CHITTELLA, Kiran, Bangalore 560008 (IN)
(74) Representative: Reeve, Nicholas Edward
(86) International application number: PCT/US2011/053091
(87) International publication number: WO 2012/057949

(56) References cited:
- US-A1- 2009 164 600
- US-A1- 2009 222 874
- US-A1- 2010 005 483
- US-A1- 2010 064 332

## Description

### TECHNICAL FIELD

The following discussion generally relates to sharing access to one or more media placeshifting devices using a network such as the Internet.

### BACKGROUND

"Placeshifting" refers to shifting the viewing location of television or other media content from one place (e.g., a home television) to another. Many commercially-available placeshifting devices and systems now allow viewers to placeshift content from their home televisions, television receivers, set top boxes (STBs), digital video recorders (DVRs) and/or the like to any other locations where network access can be obtained. Media content can be "placeshifted", for example, by providing a streaming media connection from the placeshifting device to a mobile phone, portable computer and/or other media player that may be located in a different room, building or other remote place that is nevertheless accessible via a local area and/or wide area network.

While placeshifting is becoming more commonplace, many viewers may not yet have access to their own private placeshifting systems. These viewers may nevertheless desire to obtain access to a placeshifting device in certain situations.. Some consumers may wish to evaluate a placeshifting device prior to purchase, for example, or may simply wish to use a placeshifting device for a temporary period of time. Still other viewers may wish to use a "publicly available" placeshifting device to obtain streaming media programming from a remote television broadcast market, or for any number of other purposes.

A system for making media available via place shifting is known from US2009/0164600. The system comprises a central server that tracks playback rights for the files on the system so that only a certain number of copies of each file can be made or viewed at any particular time.

We have appreciated that it would be desirable to create systems and methods that are able to provide network access to shared placeshifting devices in a manner that is relatively easy to implement and use. These and other desirable features and characteristics will become apparent from the subsequent detailed description and the appended claims, taken in conjunction with the accompanying drawings and this background section.

### BRIEF SUMMARY

The invention is defined in the independent claims to which reference should now be made. Advantageous features are set forth in the dependent claims.

Systems and methods are described for sharing otherwise idle placeshifting devices over the Internet or another network. In an exemplary embodiment, operators allow their placeshifting devices to be used by other viewers when the devices are not in use by the operators, or are otherwise idle. These idle placeshifting devices are made available to subscribers, to the public, and/or to any other group of users on a free, fee-based and/or other basis using a server that is accessible on the Internet or another network.

Examples of many different embodiments and implementations are described herein. In some embodiments, a system is provided to allow a user of a client device to share a plurality of placeshifting devices via a network. The exemplary system suitably comprises an interface to the network and a processor in communication with the interface. The processor is configured to maintain a list of available ones of the plurality of placeshifting devices that are available to share content via the network, to identify an available placeshifting device having access to content selected by the user of the client device, and to allow a placeshifting connection over the network in which the client device controls the identified available placeshifting device to thereby obtain the content selected by the user.

Other embodiments provide a method executable by a server to allow a user of a client device to access shared content associated with each of a plurality of placeshifting devices via a network. A list is maintained at the server that indicates which of the plurality of placeshifting devices is available to share content via the network. A content selection is received from the client device at the server, and an available placeshifting device is identified from the list that has access to content indicated in the content selection. A placeshifting connection is then allowed to be established over the network in which the client device controls the identified available placeshifting device to thereby obtain the content selected by the user.

Still other embodiments provide a method executable by a server to allow a user of a client device to obtain content associated with each of a plurality of placeshifting devices via a network. The method suitably comprises maintaining a list of idle placeshifting devices at the server, wherein the list indicates which of the plurality of placeshifting devices is not in use by an operator of the placeshifting device but is otherwise available to share associated content via the network. A content request is received from the client device at the server via the network, and information is provided to the client device in response to the content request that allows a user to select the content associated with at least one of the idle placeshifting devices. A content selection is received from the client device at the server via the network that indicates the selected content associated with at least one of the idle placeshifting devices. The client device is allowed to establish a placeshifting connection in response to the content selection in which the client device controls the at least one of the idle placeshifting devices to obtain the selected content.

These and other examples, aspects and other features are described in more detail below.

### BRIEF DESCRIPTION OF THE DRAWING FIGURES

Exemplary embodiments will hereinafter be described in conjunction with the following drawing figures, wherein like numerals denote like elements, and
FIG. 1 is a block diagram of an exemplary system that provides access to shared placeshifting devices; and
FIG. 2 is a diagram showing an exemplary process for providing access to shared placeshifting devices.

### DETAILED DESCRIPTION

The following detailed description of the invention is merely exemplary in nature and is not intended to limit the invention or the application and uses of the invention. Furthermore, there is no intention to be bound by any theory presented in the preceding background or the following detailed description.
Generally speaking, various embodiments provide systems and techniques for sharing access to placeshifting devices during times that the devices are otherwise idle, or not in use by their operators. These placeshifting devices can be made available during idle times to other viewers who may not have access to a placeshifting device, or who may want to access content that is placeshifted from a different geographic region (e.g. a different television market) that may not be conveniently available otherwise. Other uses may allow potential customers to evaluate placeshifting devices prior to purchase, and/or provide alternate or additional benefits as well. In some implementations, the owner of the shared placeshifting device may be compensated for allowing public access to the device, and/or communities of shared devices may be established so that users allow free or reasonably priced sharing to other members of the community. Other embodiments may provide alternate or additional features, as desired.

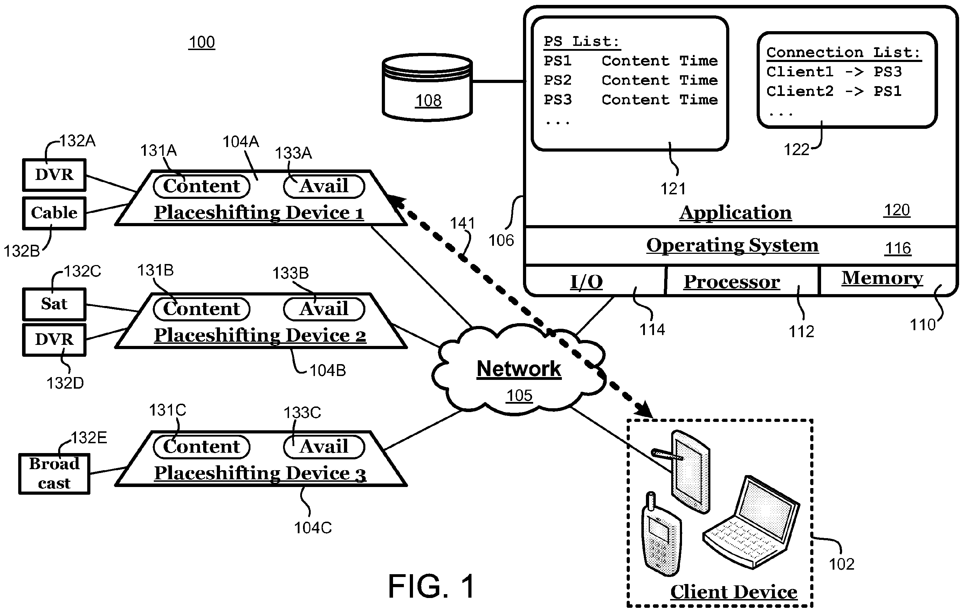

Turning now to the drawing figures and with initial reference to FIG. 1, an exemplary system 100 for sharing access to any number of placeshifting devices 104A-C suitably includes a server 106 that facilitates connections 141 with any number of client devices 102. Each connection 141 allows a client device 102 to take control of an otherwise idle placeshifting device 104A-C to thereby obtain placeshifted access to available content from one or more sources 132A-E, as appropriate. That is, connection 141 allows client device 102 to remotely obtain and view content from a source 132A-E that may not be otherwise available to client device 102.

Placeshifting devices 104A-C are any sort of placeshifting hardware, software or other components capable of streaming or otherwise shifting content received from one or more content sources 132A-E to remote viewing devices 102 accessible via network 105. Generally speaking, a placeshifting device 104A-C provides a stream of content that would traditionally be presented on a television or other display to a remote playback device via a local or wide area network. In a conventional placeshifting session, placeshifting device 104A-C suitably receives an analog or digital content stream from one or more content sources 132A-E, converts the received content stream to a format that is compatible with network 105, and transmits the converted stream over network 105 to a suitable client device 102 that is able to receive, decode and render the received stream to the viewer, as desired.

Programming content may be obtained by each placeshifting device 104A-C from any source 132A-E, including any sort of broadcast (including cable, satellite or terrestrial broadcast) television, stored programs on a digital video recorder (DVR), programs on a disk or other removable media, or any other source. Conventional cable, satellite or terrestrial broadcast television programming, for example, may be received at a tuner, STB or other receiver 132A-E, and then provided to a placeshifting device that allows for viewing of the received content on a remotely-located mobile phone, computer or other media player that is accessible via network 105 rather than on a television or other display that is directly connected to the receiver. Content may be equivalently obtained from a digital video recorder 132A, 132D, media player and/or other source, as desired. In some embodiments, one or more content sources 132A-E may be physically and/or logically combined within the same chassis or other hardware used to provide placeshifting device 104A-C, as described more fully below.

Examples of placeshifting devices 104A-C that could be used in various embodiments may include any of the various hardware devices that are commercially available, such as any of the various SLINGBOX products available from Sling Media of Foster City, California or any number of other sources. Other types of placeshifting devices 104A-C could include general purpose computers, servers or the like executing placeshifting software applications (e.g., the SLINGPROJECTOR application available from Sling Media). In some embodiments, placeshifting devices 104A-C may be implemented virtually (e.g., using any number of server instances provided by a "cloud" service, physical server system, and/or any other networked service).

Still other placeshifting devices 104A-C could include hybrid devices such as set top boxes (STBs), television receivers, media players, digital video recorders (DVRs) and/or the like that also provide placeshifting features. One example of a hybrid product could include the model VIP922 set top box available from Dish Network Corporation of Englewood, Colorado, which integrates satellite and terrestrial broadcast receivers with digital video recorder (DVR) and placeshifting features. The particular commercial products referenced herein are intended solely as illustrative examples; other placeshifting products available from any number of other sources and manufacturers could be equivalently used. Although FIG. 1 shows only three placeshifting devices 104A-C for simplicity, any number of placeshifting devices 104A-C may be operational within a practical system 100. Any such practical system 100 may provide one or many instances of placeshifting devices. For example, a VIP922-type device could be equipped to be capable of outputting two or more simultaneous placeshifted content streams to one or two simultaneous viewers. In some embodiments, the operator of the device 104A-C may be able to share one content stream while retaining the other for private use. Examples of general placeshifting systems and concepts are described in United States Patent No. 7,707,614, although any number of other placeshifting system and techniques could be equivalently applied in other embodiments.
Typically, an owner or other operator of each placeshifting device 104A-C uses the device to transmit broadcast programming or other content for his or her own purposes. If the operator of placeshifting device 104A in FIG. 1 is away from his or her home television, for example, placeshifting device 104A could be used to transmit content stored on a DVR 132A and/or programming content received via receiver 132B to the operator's mobile phone, portable computer or other client device 102 so that the operator is able to watch his or her own stored and/or broadcast programming from a remote location. If the operator travels to a different city, for example, placeshifting device 104A may be used to control cable receiver 132B to obtain live sports, news or other programming from the operator's home broadcast market for viewing on the operator's client device 102. The traveling operator may similarly use placeshifting device 104A to control and view programming stored on DVR 132A, as desired.
During time periods when the operators are not actively using their placeshifting device 104A-C, however, the devices 104A-C may be shared with other viewers via server 106 and network 105. In some implementations, operators of placeshifting devices 104A-C may designate certain times 133A-C (respectively) during which the devices 104A-C are unlikely to be in use (e.g., late at night, or any other times). These times 133A-C may be stored at the placeshifting devices 104A-C themselves, at server 106, and/or elsewhere as desired. In other embodiments, the operator may adjust a setting or other configuration parameter associated with placeshifting device 104A-C to manually activate sharing of the device as desired. Each placeshifting device 104A-C typically maintains an identifier 131A-C (respectively) that describes content available using the device 104A-C. In many implementations, an operator of each placeshifting device 104A-C initially configures the device using a software configuration program or other interface to identify a television market (e.g., by postal code or another geographic identifier) and/or source of broadcast content (e.g., a cable or satellite television provider) that may be available using device 104A-C or sources 132A-E. This information may be used, for example, to associate each device 104A-C with electronic program guide (EPG) information about the available programming. Content identifiers 131A-C may be stored on the placeshifting devices 104A-C themselves, and/or this information may be maintained at server 106 or another suitable location as desired, and as described more fully below.
Client device 102 is any device, component, program or the like that is capable of establishing a connection 141 with one or more placeshifting devices 104A-C via network 105. Client devices 102 may be variously implemented using any sort of portable or desktop computer system, mobile telephone, tablet device, media player and/or the like. In some embodiments, client device 102 may be implemented with special-purpose hardware such as the SLINGCATCHER product available from Sling Media, or the like. Client device 102 typically provides interface features to allow the viewer to control one or more placeshifting devices 104A-C remotely via connection 141. As described more fully below, the placeshifting connection 141 typically allows the viewer to select and obtain content from a source 132A-E associated with the controlled placeshifting device 104A-C, and to manipulate the content stream (e.g., to select channels on a television receiver, to play, pause, rewind, fast forward, or otherwise manipulate a stream received from a DVR 132A, or to take other actions as desired. The client device 102 typically also includes hardware or software logic that is able to decode the received media stream from the placeshifting device 104A-C.
Network 105 may encompass any number of digital or other communications networks that allow multiple nodes to communicate with each other using any common protocols, signaling schemes and/or the like. In various embodiments, network 105 encompasses one or more wired or wireless local area networks (LANs), wide area networks (WANs), and/or the like. Network 105 may also encompass the Internet, any cellular or other telephone network, and/or any other pubic or private networks as desired.
As noted above, server 106 suitably facilitates sharing of one or more placeshifting devices 104A-C by viewers of client devices 102 when the devices 104A-C are otherwise idle. Generally speaking, server 106 maintains a list 121 of available placeshifting devices 104A-C that are available to share content sources 132A-E via network 105. As client devices 102 contact server 106 to request access to particular content 132A-E, server 106 appropriately identifies a placeshifting device 104A-C that has access to the selected content and facilitates a placeshifting connection between the client device 102 and the identified placeshifting device 104A-C as appropriate. Server 106 may also maintain a list 122 of active connections, and/or may provide registration, authentication, access control, billing and/or other features, as described more fully below. To that end, server 106 is any hardware, software and/or other logic that is accessible via network 105 and that coordinates the sharing of placeshifting devices 104A-C. The placeshifting devices 104A-C may be physically located local or remote to server 106. Server 106 may also maintain (or at least have access to) a database 108 that contains user information (e.g., accounts, passwords, etc) and/or billing information, as desired. In the embodiment illustrated in FIG. 1, server 106 is shown using conventional network server hardware, software, firmware and/or other components such as a conventional processor 112, memory 110, input/output features 114, or the like. Server 106 typically executes an operating system 116 (e.g, LINUX, UNIX, WINDOWS and/or the like) that allows applications 120 to interact with hardware 110-114. Operating system 116 typically includes socket or other programming mechanisms that allow application 120 to access network interfaces, mass storage and/or other Various embodiments of server 106 may be implemented using dedicated or shared hardware servers; other implementations may make use of virtual server features as part of a "cloud computing" service, such as any of the cloud computing services provided by AMAZON, GOOGLE, MICROSOFT, IBM, UBUNTU, SUN MICROSYSTEMS, SALESFORCE.COM and/or any number of other providers. The Amazon Web Services (AWS) products and services available from Amazon.com, for example, could be used to implement some or all of server 106 in some embodiments, although other embodiments may use any other products or services as desired. In some implementation, multiple servers 106 may be provided (along with appropriate server assignment, messaging, security and/or load balancing features) to provide additional processing capability as needed.
In operation, then, server 106 maintains a list 121 of idle placeshifting devices 104A-C that are available for sharing by other users. To obtain access to a "public" or shared placeshifting device 104A-C, a viewer suitably operates a client device 102 to connect with server 106. Server 106 suitably identifies an available placeshifting device 104A-C on list 121 that has access to the particular content desired by the viewer, and facilitates a placeshifting connection 141 between the client device 102 and the identified placeshifting device 104A-C as appropriate.

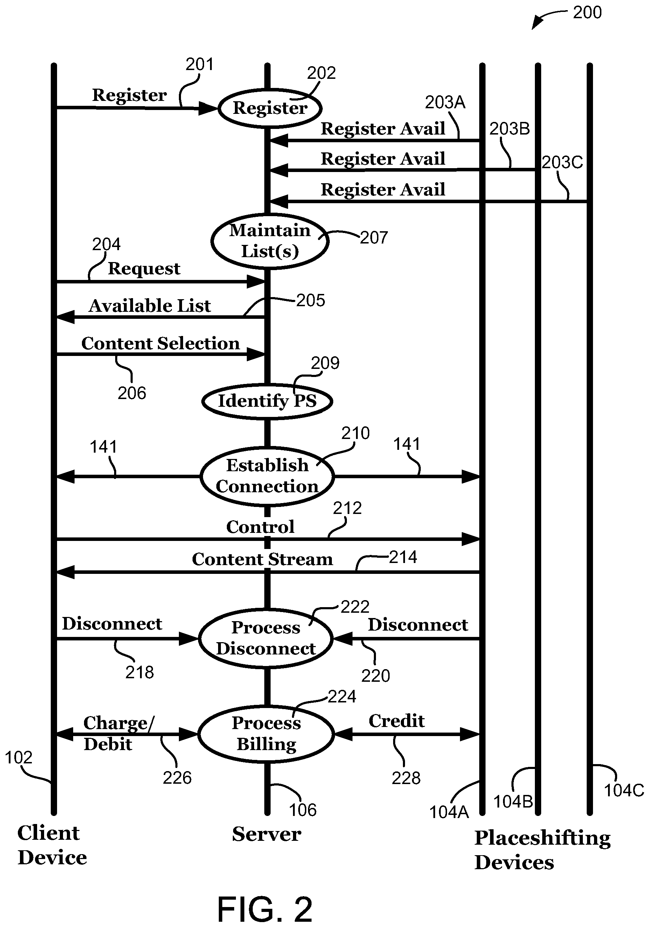

FIG. 2 shows an exemplary process 200 to share content from one or more placeshifting devices 104A-C to a client 102. This process 200 shows communications and processing handled by client 102, server 106 and one or more placeshifting devices 104A-C. Each of the processing functions may be implemented in hardware, software and/or firmware logic, as appropriate. The various functions associated with server 106, for example, may be carried out in response to software instructions stored in memory 110 and executed by processor 112 or the like.
In many embodiments, sharing may be restricted to users who have registered with an appropriate service provider (function 202) and/or paid an appropriate fee. To register, the user of a client device 102 typically provides a registration credential 201 to the server 106, as appropriate. In many implementations, the viewer may also provide contact and/or billing information, demographic information, and/or other information as desired. Registration credentials may include userid/password combinations, account numbers, biometric data, and/or any other information that identifies the viewer. Registration 202 may be useful in granting or restricting viewing rights to particular content or particular placeshifting devices, as desired. An operator of a particular placeshifting device 104 may, for example, want to restrict sharing to a particular set of known users, or certain content may be restricted due to licensing or intellectual property limits, business policies and/or for any other reasons. The registration function 202, when provided, can help ensure that only authorized users are able to gain access to certain devices 104A-C, content sources 132A-E, programming, and/or the like. Registration 202 may also be used to enforce payment requirements, such as pre-payment for access to shared content, as described more fully below. Registration 202 may also assist in tracking viewer actions, system usage, and any number of other metrics, as desired. Some embodiments, however, may not require registration, but rather may allow anonymous or other less restrictive access to shared content, as desired. Placeshifting devices 104A-C each register with server 106 to indicate that the devices are available for sharing (functions 203A-C, respectively). Registration messages 203A-C may be provided on a real-time basis in some embodiments so that that server 106 is notified at the particular times that each placeshifting device 104A-C becomes available for sharing. Such messages 203A-C may be sent in response to a manual instruction provided by the device operator or by an automated process within the device 104A-C, as appropriate. Other embodiments may provide registration messages 203A-C to server 106 in a more batch-like mode, wherein the message 203A-C indicates approved times that the device is available for sharing (e.g., "2-5:30 AM, Monday through Friday"). Such embodiments may further provide an "override" feature that allows the device operator to stop or prevent sharing during such times, if desired. Other embodiments may automatically register the device 104A-C for sharing when the device 104A-C has been inactive for an appropriate period of time, as desired. Registration messages 203A-C may, in some implementations, contain content identifiers 131A-C. Other embodiments may maintain the content information at server 106 separately from timing/availability information for each placeshifting device 104A-C, as desired.
Server 106 maintains lists 121 and/or 122 as appropriate (function 207). As placeshifting devices 104A-C become available for sharing (e.g., as indicated in registration messages 203A-C), entries in list 121 may be updated as desired. Server 106 also maintains information 131A-C about the content 132A-E that is available from each available placeshifting device 104A-C, as appropriate. This information may be maintained in list 121, or elsewhere as appropriate. Various embodiments of list 121 may additionally track expiration times (e.g., times that the device 104A-C will no longer be available for sharing), and/or any other information related to the particular placeshifting device 104A-C as desired. Function 207 may also involve maintaining a second list 122 of active connections 141, as appropriate.
In many embodiments, viewers suitably obtain shared content by using client device to request 204 a listing 205 of devices 104A-C and/or content that is available to be shared. Request 204 may, in practice, involve several messages that allow for verification of registration data, authentication, or other features as desired. If the viewer's request 204 for content 204 is valid and approved, server 106 suitably provides a list 205 of available devices 104A-C and/or content based upon information maintained in list 121. The list 205 that is sent to the client device 102 may be customized for the particular viewer in some implementations. List 205 may be customized based upon rights granted to the viewer, for example, or based upon the viewer's geographic location, or any other factors. Geographic location may be determined from an Internet Protocol (IP) address of message 204, or in any other manner.
The viewer then selects the desired content, and client device 102 transmits a content selection 206 to server 106 as appropriate. The selected content may be very specific (e.g., a particular device 104A-C, or a particular program or episode available from a DVR or broadcast source) in some cases. A viewer might request, for example, shared access to a particular sporting match or a particular episode of a particular program. In other cases, the selected content may be more general. A viewer may request access to a placeshifting device 104A-C that has access to a certain terrestrial, satellite or cable broadcast service in a particular locale, for example, without necessarily specifying the program, channel or episode to be viewed. In such embodiments a viewer may request, for example, to share a placeshifting device 104A-C that has access to a particular broadcast service in a particular locale (e.g., "Cable provider package B in San Francisco, USA", "DBS gold package in Bangalore, India", "Terrestrial broadcasts in Phoenix, AZ") and/or the like. In still other embodiments, the content selection 206 may indicate a desired signal quality (e.g., received signal strength of a satellite or terrestrial broadcast), resolution (e.g., standard or high definition), and/or other parameter for the selected content and/or device to be shared.
Server 106 suitably identifies a placeshifting device 104A-C that is available for sharing and that has access to the requested content (function 209). In some cases, an available placeshifting device 104A-C can be readily identified from list 121. In other cases, it may be helpful to additionally consult a program guide to identify which placeshifting devices 104A-C may have access to a particular program that is requested by the viewer. Other embodiments may identify one or more placeshifting devices 104A-C that have access to the particular content in any other manner. One of these placeshifting devices 104A-C is then selected as the appropriate host for the viewer. Function 209 may additionally provide enforcement of digital rights management (DRM) mechanisms, blacklists, access controls, and/or other mechanisms that might limit the viewer's ability to view content that would otherwise be available.
Connection 141 is established between client device 102 and the identified placeshifting device 104A-C in any manner (function 210). In various embodiments, server 106 facilitates the establishment of connection 141 by providing addresses, security tokens, and/or other information as needed to either of both of devices 102, 104A-C. In various embodiments, an address of the identified placeshifting device (e.g., device 104A in the example illustrated in FIG. 2) is provided to client device 102 so that client device 102 is able to contact the identified placeshifting device 104A to set up connection 141 directly. Some embodiments may further notify the identified placeshifting device 104A that a connection to client device 102 has been approved. If a direct connection to the identified placeshifting connection 104A is difficult to establish due to firewalls or other features of network 105, any number of intermediating techniques could be used. Several examples of techniques for establishing connections to placeshifting devices 104 that are located behind firewalls are described in United States Patent Publication No. 2010/0268832, and various systems and techniques for establishing a secure placeshifting connection are described in United States Patent Publication No. 2010/0005483. Further, other connection systems and techniques could be used separately or in conjunction with those described in these publications.
In some implementations, server 106 is able to securely share access to placeshifting devices 104A-C while maintaining viewer anonymity. Server 106 can authenticate a user, for example, and then send an approval message to the shared device 104A-C that authorizes the sharing connection 141. The placeshifting device 104A-C is then able to accept the secure connection based upon trust in server 106, even if the device 104A-C does not have any additional information about client device 102 or the viewer. Server 106 may authorize a connection 141 to a particular network address (e.g., an IP address) associated with client device 102, for example, without providing additional information. To provide even more anonymity, server 106 could alternately provide (or at least reference) a proxy address and/or an intermediary service on network 105 that is accessible to both client device 102 and placeshifting devices 104A-C. Server 106 could relay a proxy address for client device 102 to a shared device 104, for example, to preserve the anonymity of the client device 102 and viewer while still allowing communications via the proxy. An intermediating service (which could be implemented as part of server 106, or as a separate service) could similarly accept connections from both client device 102 and shared device 104A-C and relay data between the two devices without identifying either device to the other. Any number of equivalent embodiments may implement security, privacy and/or anonymity features in any other manner.
Connection 141 typically includes a control channel 212 and a content stream 214, as appropriate. After connection 141 is established between the client device 102 and the identified placeshifting device 104A, client device 102 appropriately controls the placeshifting device 104A using control channel 212 to select and adjust the content stream 214 as desired. While the placeshifting device 104A is under control by the client device 102, it is typically unavailable for use by the owner or operator of the device 104A itself. That is, content provided to device 104A is "shifted" to the remotely-located client device 102 instead of being presented on a local television or other display. Content stream 214 may be provided in any conventional format, such as, for example, Windows Media, Quicktime, Flash Media, MPEG, HTML5, Apple HTTP streaming and/or any other formats as desired.

The placeshifting session between placeshifting device 104A and client device 102 may continue for any appropriate duration. If the viewer is finished viewing content from the identified placeshifting device 104A, client device 102 may initiate a disconnection 218 in response to viewer inputs. In various embodiments, limits may be set upon the times that an operator is willing to share the placeshifting device 104A-C, and these limits may be enforced by the device 104 itself, by server 106, and/or in any other manner. Server 106 may additionally disconnect the connection 141 if the viewer's pre-paid time has expired, or for any other reason. To that end, various embodiments may allow the shared placeshifting device 104A, the client device 102 and/or the server 106 to initiate a disconnect at any time (function 222).

After a connection 141 to a particular placeshifting device 104A is disconnected, the placeshifting device 104A may notify the server 106 of the disconnection (function 220). Alternately, placeshifting device 104A may simply transmit a new registration message (e.g., message 203A) to indicate that the device 104A is again ready to share content. In various embodiments, server 106 responds to disconnection notices 218 and/or 220 by updating connection list 122, as appropriate.

As noted above, various embodiments of server 106 are able to process billing functions (function 224) in any manner. As noted above in connection, billing or payment accounts may be maintained (e.g., in database 108 or elsewhere in connection with server 106) for viewers and/or operators of placeshifting devices 104A-C. In various embodiments, viewers may be charged 226 for shared access to placeshifting devices 104A-C as desired. Charges 226 may be levied on a temporal basis (e.g., a per-minute charge for the duration of connection 141), on a per-connection basis (e.g., a flat rate for each connection 141 established), on a daily/weekly/monthly/annual or other temporal basis (e.g., a flat amount per time period covers all usage during that time period), and/or in any other way. Various embodiments may additionally or alternately charge for access to particular programs, channels or other resources (e.g., a fee for viewing a movie channel or premium network) as desired. Charges may also be imposed for higher quality content (e.g,, higher resolution video, or content that is more valuable for any reason). The example of FIG. 2 shows charges being levied in arrears, after the connection 141 is disconnected; equivalent embodiments, however, may process billing 224 prior to establishing the connection and/or concurrently while the connection persists. Payment may be processed using conventional credit or debit card processing, automated clearing house (ACH), and/or any other conventional techniques. In various embodiments, each viewer pre-pays for "credits" that are tracked in an account in database 108 that is associated with the viewer. Credits are exchanged for connections, connection time, premium content, and/or other benefits. Other embodiments may process billing 224 in any other manner desired.

Further embodiments may additionally or alternately provide billing credit 228 to placeshifting device operators as compensation for sharing access to their devices 104A-C. Credits may be awarded and tracked within database 108, as desired. Credits may be exchanged for anything of value, including cash, credit on a television billing statement, access to other shared placeshifting devices 104A-C, and/or the like. In various embodiments, operators are encouraged to share access to their placeshifting devices 104 by providing billing credits 228 in an account maintained by server 106 that can be redeemed in exchanged for placeshifting sessions with other placeshifting devices 104A-C (e.g., devices 104 that are located in other locales or that have stored content that would be otherwise unavailable to the operator). Content owners or providers may also be compensated by server 106 or the like to as payment for DRM or other fees. Other credit/reward systems and techniques may be implemented as well.

Accordingly, new systems and techniques are presented for allowing a user of a computer, mobile phone, tablet or other device to share access to an idle placeshifting device. In various embodiments, this could allow for any number of benefits, such as access to placeshifted content from other media markets that may not be readily available to the viewer. Other embodiments may use equivalent systems and techniques to provide trial evaluations of placeshifting systems or features, or for any other purposes.

While the examples above typically describe the "idle" or "available" placeshifting devices 104A-C in the context of privately owned and operated devices that are made available for more public use, equivalent embodiments may provide any number of placeshifting devices from a service provider or the like. Server 106, for example, could physically and/or logically incorporate any number of placeshifting devices 104A-C that receive or store content from any number of sources. A television content aggregator (e.g., a direct broadcast satellite or cable operator) may provide a placeshifting service, for example, that is based upon any number of commonly administered placeshifting devices 104. Any number of placeshifting devices 104A-C may be implemented using software executing on instantiated hardware operated by a cloud service, for example, to provide a scalable and manageable placeshifting sharing service, as desired.

As used herein, the word "exemplary" means "serving as an example, instance, or illustration." Any implementation described herein as exemplary is not necessarily to be construed as preferred or advantageous over other implementations.

While the foregoing detailed description will provide those skilled in the art with a convenient road map for implementing various embodiments of the invention, it should be appreciated that the particular embodiments described above are only examples, and are not intended to limit the scope, applicability, or configuration of the invention in any way. To the contrary, various changes may be made in the function and arrangement of elements described without departing from the scope of the invention as defined in the following claims.

## Claims

1. A system to allow a user of a client device (102) to access a plurality of placeshifting devices (104A-C) via a network (105), wherein each of the plurality of placeshifting devices (104A-C) is a remotely-located user-operated device operated by another operator, the system comprising:
a processor (112) coupled with the network (105) via an interface (114), wherein the processor (112) is configured to maintain a list of available placeshifting devices (104A-C) that are available to share associated content (131A-C) via the network (105),
to identify an available placeshifting device operated by another operator (104A-C) having access to content (131A-C) selected by the user of the client device (102), and that is otherwise idle and;
to establish a placeshifting connection over the network (105) in which the client device (102) controls the identified available placeshifting device (104A-C) to thereby obtain the content (131A-C) selected by the user; and
wherein the identified available placeshifting device (104A-C) is not available for use by an operator of the identified available placeshifting device while the placeshifting connection is active.

2. The system of claim 1 wherein the processor (112) is configured to receive a registration message from each of the plurality of placeshifting devices (104A-C) indicating a time that the placeshifting device (104A-C) is available for sharing and the content (131A-C) that is available from the placeshifting device (104A-C), and to update the list in response to the registration messages received from the plurality of placeshifting devices (104A-C).

3. The system of claim 1 wherein the each of the plurality of placeshifting devices (104A-C) is removed from the list of available placeshifting devices (104A-C) when the placeshifting device (104A-C) is in use by the operator of the placeshifting device (104A-C).

4. The system of claim 1 further comprising a billing database (108) configured to maintain an account associated with the user, and wherein the processor (106) is configured to charge the account associated with the user for the placeshifting connection.

5. The system of claim 4 wherein the billing database (108) further comprises a second account associated with an operator of the identified available placeshifting device (104A-C), and wherein the processor is further configured to credit the second account for the placeshifting connection.

6. A method executable by a server (106) to allow a user of a client device (102) to access shared content (131A-C) associated with each of a plurality of placeshifting devices (104A-C) via a network (105), wherein each of the plurality of placeshifting devices (104A-C) is a remotely-located user-operated device operated by another operator, the method comprising:
maintaining a list of available placeshifting devices (104A-C) that are available to share associated content (131A-C) via the network (105);
receiving a content selection from the client device (102) at the server (106); identifying, at the server (106), an available placeshifting device (104A-C) operated by another operator having access to content (131A-C) selected by the user of the client device (102), and that is otherwise idle and;
establish a placeshifting connection over the network (105) in which the client device (102) controls the identified available placeshifting device (104A-C) to thereby obtain the content (131A-C) selected by the user;
wherein the identified available placeshifting device (104A-C) is not available for use by an operator of the identified available placeshifting device while the placeshifting connection is active.

7. The method of claim 6, comprising receiving, at the server (106), a registration message from each of the plurality of placeshifting devices (104A-C), wherein the registration message indicates a time that the placeshifting device (104A-C) is available for sharing and the content (131A-C) that is available from the placeshifting device (104A-C), and wherein the maintaining comprises updating the list in response to the registration messages received from the plurality of placeshifting devices (104A-C).

8. The method of claim 7 wherein the maintaining comprises removing one of the placeshifting devices (104A-C) from the list of available placeshifting devices when the placeshifting device (104A-C) is in use by an operator of the placeshifting device (104A-C).

9. The method of claim 6 wherein establishing the placeshifting connection comprises providing an address of the at least one idle placeshifting device (104A-C) associated with the selected content (131A-C) to the client device (102).

10. The method of claim 6 wherein the allowing comprises providing an address of the client device (102) to the at least one idle placeshifting device (104A-C) associated with the selected content (131A-C).

11. The method of claim 6 further comprising receiving registration messages from at least some of the plurality of placeshifting devices (104A-C) at the server (106) via the network, and updating the list in response to the registration messages.

12. The method of claim 11 further comprising receiving a disconnect notice via the network (105), indicating that the placeshifting connection is terminated, and wherein the maintaining comprises updating the list in response to the disconnect notice.

13. The method of claim 14 further comprising maintaining a second list of connections to the plurality of idle placeshifting devices (104A-C), wherein the second list of connections is updated in response to allowing the client device to establish the placeshifting connection (104A-C) and in response to receiving the disconnect notice.

14. The method of claim 9 wherein each of the plurality of placeshifting devices (104A-C) is available to the server (106) for a period of time that is predetermined by the operator of the placeshifting device (104A-C).

15. The method of claim 14 wherein the placeshifting device (104A-C) is not available for use by the operator of the placeshifting device (104A-C) during the period of time that the placeshifting device (104A-C) is available to the server (106).

## Patentansprüche

1. System, um es einem Benutzer eines Client-Geräts (102) zu gestatten, über ein Netzwerk (105) auf mehrere ortsunabhängige Geräte (104A-C) zuzugreifen, wobei jedes der mehreren ortsunabhängigen Geräte (104A-C) ein von einem anderen Betreiber betriebenes, vom Benutzer bedientes Gerät an einem entfernten Standort ist, wobei das System Folgendes umfasst:
einen Prozessor (112), der mit dem Netzwerk (105) über eine Schnittstelle (114) gekoppelt ist, wobei der Prozessor (112) zum Führen einer Liste von verfügbaren ortsunabhängigen Geräten (104A-C) konfiguriert ist, die zum gemeinsamen Nutzen von assoziiertem Inhalt (131A-C) über das Netzwerk (105) zur Verfügung stehen,
zum Identifizieren eines verfügbaren ortsunabhängigen Geräts, das von einem anderen Betreiber (104A-C) betrieben wird, mit Zugang zu Inhalt (131A-C), der vom Benutzer des Client-Geräts (102) ausgewählt wird, und das ansonsten im Ruhezustand ist, und
zum Aufbauen einer ortsunabhängigen Verbindung über das Netzwerk (105), in der das Client-Gerät (102) das identifizierte verfügbare ortsunabhängige Gerät (104A-C) steuert, um dadurch den vom Benutzer gewählten Inhalt (131A-C) zu erhalten; und
wobei das identifizierte verfügbare ortsunabhängige Gerät (104A-C) nicht für die Verwendung durch einen Betreiber des identifizierten verfügbaren ortsunabhängigen Geräts zur Verfügung steht, während die ortsunabhängige Verbindung aktiv ist.

2. System nach Anspruch 1, wobei der Prozessor (112) zum Empfangen einer Registrierungsnachricht von jedem der mehreren ortsunabhängigen Geräte (104A-C) konfiguriert ist, die eine Zeit, während der das ortsunabhängige Gerät (104A-C) zur gemeinsamen Nutzung verfügbar ist, und den Inhalt (131A-C) anzeigt, der von dem ortsunabhängigen Gerät (104A-C) verfügbar ist, und zum Aktualisieren der Liste als Reaktion auf die von den mehreren ortsunabhängigen Geräten (104A-C) empfangenen Registrierungsnachrichten.

3. System nach Anspruch 1, wobei jedes der mehreren ortsunabhängigen Geräte (104A-C) aus der Liste von verfügbaren ortsunabhängigen Geräten (104A-C) entfernt wird, wenn das ortsunabhängige Gerät (104A-C) vom Betreiber des ortsunabhängigen Geräts (104A-C) gebraucht wird.

4. System nach Anspruch 1, das ferner eine Fakturierungsdatenbank (108) umfasst, konfiguriert zum Führen eines mit dem Benutzer assoziierten Kontos, und wobei der Prozessor (106) zum Belasten des mit dem Benutzer assoziierten Kontos für die ortsunabhängige Verbindung konfiguriert ist.

5. System nach Anspruch 4, wobei die Fakturierungsdatenbank (108) ferner ein zweites Konto umfasst, das mit einem Betreiber des identifizierten verfügbaren ortsunabhängigen Geräts (104A-C) assoziiert ist, und wobei der Prozessor ferner zum Gutschreiben auf das zweite Konto für die ortsunabhängige Verbindung konfiguriert ist.

6. Verfahren, das von einem Server (106) ausgeführt werden kann, um es einem Benutzer eines Client-Geräts (102) zu gestatten, über ein Netzwerk (105) auf gemeinsam genutzten Inhalt (131A-C) zuzugreifen, der mit jedem der mehreren ortsunabhängigen Geräte (104A-C) assoziiert ist,
wobei jedes der mehreren ortsunabhängigen Geräte (104A-C) ein von einem anderen Betreiber betriebenes, vom Benutzer bedientes Gerät an einem entfernten Standort ist, wobei das Verfahren Folgendes beinhaltet:
Führen einer Liste von verfügbaren ortsunabhängigen Geräten (104A-C), die zum gemeinsamen Nutzen von assoziiertem Inhalt (131A-C) über das Netzwerk (105) zur Verfügung stehen;
Empfangen einer Inhaltsauswahl vom Client-Gerät (102) am Server (106);
Identifizieren, am Server (106), eines verfügbaren ortsunabhängigen Geräts (104A-C), das von einem anderen Betreiber betrieben wird, mit Zugang zu Inhalt (131A-C), der vom Benutzer des Client-Geräts (102) ausgewählt wurde, und das ansonsten im Ruhezustand ist, und
Aufbauen einer ortsunabhängigen Verbindung über das Netzwerk (105), in der das Client-Gerät (102) das identifizierte verfügbare ortsunabhängige Gerät (104A-C) steuert, um dadurch den vom Benutzer gewählten Inhalt (131A-C) zu erhalten;
wobei das identifizierte verfügbare ortsunabhängige Gerät (104A-C) nicht zur Verwendung durch einen Betreiber des identifizierten verfügbaren ortsunabhängigen Geräts zur Verfügung steht, während die ortsunabhängige Verbindung aktiv ist.

7. Verfahren nach Anspruch 6, das ferner das Empfangen, am Server (106), einer Registrierungsnachricht von jedem der mehreren ortsunabhängigen Geräte (104A-C) beinhaltet, wobei die Registrierungsnachricht eine Zeit, zu der das ortsunabhängige Gerät (104A-C) zum gemeinsamen Nutzen zur Verfügung steht, und den Inhalt (131A-C) anzeigt, der von dem ortsunabhängigen Gerät (104A-C) zur Verfügung steht, und wobei das Führen das Aktualisieren der Liste als Reaktion auf die von den mehreren ortsunabhängigen Geräten (104A-C) empfangenen Registrierungsnachrichten beinhaltet.

8. Verfahren nach Anspruch 7, wobei das Führen das Entfernen von einem der ortsunabhängigen Geräte (104A-C) aus der Liste von verfügbaren ortsunabhängigen Geräten beinhaltet, wenn das ortsunabhängige Gerät (104A-C) von einem Betreiber des ortsunabhängigen Geräts (104A-C) gebraucht wird.

9. Verfahren nach Anspruch 6, wobei das Aufbauen der ortsunabhängigen Verbindung das Bereitstellen, dem Client-Gerät (102), einer Adresse des wenigstens einen im Ruhezustand befindlichen, mit dem gewählten Inhalt (131A-C) assoziierten ortsunabhängigen Geräts (104A-C) beinhaltet.

10. Verfahren nach Anspruch 6, wobei das Zulassen das Bereitstellen einer Adresse des Client-Geräts (102) dem wenigstens einen im Ruhezustand befindlichen, mit dem gewählten Inhalt (131A-C) assoziierten ortsunabhängigen Geräts (104A-C) beinhaltet.

11. Verfahren nach Anspruch 6, das ferner das Empfangen von Registrierungsnachrichten von wenigstens einigen der mehreren ortsunabhängigen Geräte (104A-C) am Server (106) über das Netzwerk und das Aktualisieren der Liste als Reaktion auf die Registrierungsnachrichten beinhaltet.

12. Verfahren nach Anspruch 11, das ferner das Empfangen einer Abtrennmitteilung über das Netzwerk (105) beinhaltet, die anzeigt, dass die ortsunabhängige Verbindung terminiert wird, und wobei das Führen das Aktualisieren der Liste als Reaktion auf die Abtrennmitteilung beinhaltet.

13. Verfahren nach Anspruch 14, das ferner das Führen einer zweiten Liste von Verbindungen mit den mehreren im Ruhezustand befindlichen ortsunabhängigen Geräten (104A-C) beinhaltet, wobei die zweite Liste von Verbindungen als Reaktion darauf, dass zugelassen wird, dass das Client-Gerät die ortsunabhängige Verbindung (104A-C) aufbaut, und als Reaktion auf den Empfang der Abtrennmitteilung aktualisiert wird.

14. Verfahren nach Anspruch 9, wobei jedes der mehreren ortsunabhängigen Geräte (104A-C) dem Server (106) für eine Zeitperiode zur Verfügung steht, die vom Betreiber des ortsunabhängigen Geräts (104A-C) vorbestimmt wird.

15. Verfahren nach Anspruch 14, wobei das ortsunabhängige Gerät (104A-C) nicht für die Verwendung durch den Betreiber des ortsunabhängigen Geräts (104A-C) während der Zeitperiode zur Verfügung steht, während der das ortsunabhängige Gerät (104A-C) dem Server (106) zur Verfügung steht.

## Revendications

1. Système destiné à permettre à un utilisateur d'un dispositif client (102) d'accéder à une pluralité de dispositifs d'accès en nomade (104A-C) par un réseau (105), dans lequel chacun de la pluralité de dispositifs d'accès en nomade (104A-C) est un dispositif situé à distance exploité par un utilisateur, exploité par un autre opérateur, le système comprenant :
un processeur (112) couplé au réseau (105) via une interface (114) dans lequel le processeur (112) est configuré pour tenir à jour une liste de dispositifs d'accès en nomade disponibles (104A-C) qui sont disponibles pour partager un contenu associé (131A-C) par le réseau (105),
identifier un dispositif d'accès en nomade disponible exploité par un autre opérateur (104A-C) ayant accès au contenu (131A-C) sélectionné par l'utilisateur du dispositif client (102) et qui est autrement inactif ; et
établir une connexion d'accès en nomade sur le réseau (105) dans laquelle le dispositif client (102) commande le dispositif d'accès en nomade disponible identifié (104A-C) pour obtenir ainsi le contenu (131A-C) sélectionné par l'utilisateur ; et
dans lequel le dispositif d'accès en nomade disponible identifié (104A-C) n'est pas disponible pour utilisation par un opérateur du dispositif d'accès en nomade disponible identifié pendant que la connexion d'accès en nomade est active.

2. Système selon la revendication 1, dans lequel le processeur (112) est configuré pour recevoir un message d'enregistrement de chacun de la pluralité de dispositifs d'accès en nomade (104A-C) indiquant un temps auquel le dispositif d'accès en nomade (104A-C) est disponible pour partager et le contenu (131A-C) qui est disponible du dispositif d'accès en nomade (104A-C), et pour actualiser la liste en réponse aux messages d'enregistrement reçus de la pluralité de dispositifs d'accès en nomade (104A-C).

3. Système selon la revendication 1, dans lequel chacun de la pluralité de dispositifs d'accès en nomade (104A-C) est retiré de la liste de dispositifs d'accès en nomade disponibles (104A-C) lorsque le dispositif d'accès en nomade (104A-C) est en cours d'utilisation par l'opérateur du dispositif d'accès en nomade (104A-C).

4. Système selon la revendication 1, comprenant en outre une base de données de facturation (108) configurée pour tenir à jour un compte associé à l'utilisateur, et dans lequel le processeur (106) est configuré pour facturer le compte associé à l'utilisateur pour la connexion d'accès en nomade.

5. Système selon la revendication 4, dans lequel la base de données de facturation (108) comprend en outre un deuxième compte associé à un opérateur du dispositif d'accès en nomade disponible identifié (104A-C), et dans lequel le processeur est configuré en outre pour créditer le deuxième compte pour la connexion d'accès en nomade.

6. Procédé exécutable par un serveur (106) pour permettre à un utilisateur d'un dispositif client (102) d'accéder à un contenu partagé (131A-C) associé à chacun d'une pluralité de dispositifs d'accès en nomade (104A-C) par un réseau (105),
dans lequel chacun de la pluralité de dispositifs d'accès en nomade (104A-C) est un dispositif situé à distance exploité par un utilisateur, exploité par un autre opérateur, le procédé comprenant :
tenir à jour une liste de dispositifs d'accès en nomade disponibles (104A-C) qui sont disponibles pour partager un contenu associé (131A-C) par le réseau (105) ;
recevoir une sélection de contenus du dispositif client (102) au serveur (106) ;
identifier, au serveur (106), un dispositif d'accès en nomade disponible (104A-C) exploité par un autre opérateur ayant accès au contenu (131A-C) sélectionné par l'utilisateur du dispositif client (102) et qui est autrement inactif ; et
établir une connexion d'accès en nomade sur le réseau (105) dans laquelle le dispositif client (102) commande le dispositif d'accès en nomade disponible identifié (104A-C) pour obtenir ainsi le contenu (131A-C) sélectionné par l'utilisateur ;
dans lequel le dispositif d'accès en nomade disponible identifié (104A-C) n'est pas disponible pour utilisation par un opérateur du dispositif d'accès en nomade disponible identifié pendant que la connexion d'accès en nomade est active.

7. Procédé selon la revendication 6, comprenant le fait de recevoir, au serveur (106), un message d'enregistrement de chacun de la pluralité de dispositifs d'accès en nomade (104A-C), dans lequel le message d'enregistrement indique un temps auquel le dispositif d'accès en nomade (104A-C) est disponible pour partager et le contenu (131A-C) qui est disponible du dispositif d'accès en nomade (104A-C), et dans lequel la tenue à jour comprend actualiser la liste en réponse aux messages d'enregistrement reçus de la pluralité de dispositifs d'accès en nomade (104A-C).

8. Procédé selon la revendication 7, dans lequel la tenue à jour comprend retirer l'un des dispositifs d'accès en nomade (104A-C) de la liste de dispositifs d'accès en nomade disponibles lorsque le dispositif d'accès en nomade (104A-C) est en cours d'utilisation par un opérateur du dispositif d'accès en nomade (104A-C).

9. Procédé selon la revendication 6, dans lequel le fait d'établir la connexion d'accès en nomade comprend fournir une adresse d'au moins un dispositif d'accès en nomade inactif (104A-C) associé au contenu sélectionné (131A-C) au dispositif client (102).

10. Procédé selon la revendication 6, dans lequel le fait de permettre comprend fournir une adresse du dispositif client (102) au au moins un dispositif d'accès en nomade inactif (104A-C) associé au contenu sélectionné (131A-C).

11. Procédé selon la revendication 6, comprenant en outre le fait de recevoir des messages d'enregistrement d'au moins certains de la pluralité de dispositifs d'accès en nomade (104A-C) au serveur (106) par le réseau, et d'actualiser la liste en réponse aux messages d'enregistrement.

12. Procédé selon la revendication 11, comprenant en outre le fait de recevoir un avis de déconnexion par le réseau (105), indiquant que la connexion d'accès en nomade est terminée, et dans lequel la tenue à jour comprend actualiser la liste en réponse à l'avis de déconnexion.

13. Procédé selon la revendication 14, comprenant en outre le fait de tenir à jour une deuxième liste de connexions à la pluralité de dispositifs d'accès en nomade inactifs (104A-C), dans lequel la deuxième liste de connexions est actualisée en réponse au fait de permettre au dispositif client d'établir la connexion d'accès en nomade (104A-C) et en réponse au fait de recevoir l'avis de déconnexion.

14. Procédé selon la revendication 9, dans lequel chacun de la pluralité de dispositifs d'accès en nomade (104A-C) est disponible au serveur (106) pendant une période de temps qui est prédéterminée par l'opérateur du dispositif d'accès en nomade (104A-C).

15. Procédé selon la revendication 14, dans lequel le dispositif d'accès en nomade (104A-C) n'est pas disponible pour utilisation par l'opérateur du dispositif d'accès en nomade (104A-C) pendant la période de temps durant laquelle le dispositif d'accès en nomade (104A-C) est disponible au serveur (106).
